(19) Europäisches Patentamt

European Patent Office

Office européen des brevets

(11) EP 1 032 174 A2

(12) EUROPEAN PATENT APPLICATION

(43) Date of publication:
30.08.2000 Bulletin 2000/35

(51) Int. Cl.$^{7}$: H04L 27/26

(21) Application number: 00200532.0

(22) Date of filing: 17.02.2000

(84) Designated Contracting States:
AT BE CH CY DE DK ES FI FR GB GR IE IT LI LU
MC NL PT SE
Designated Extension States:
AL LT LV MK RO SI

(30) Priority: 23.02.1999 IT MI990360

(71) Applicant:
Telit Mobile Terminals S.p.A.
34010 Sgonico (Trieste) (IT)

(72) Inventors:
• Vangelista, Lorenzo
  36061 Bassano del Grappa, Vicenza (IT)
• Laurenti, Nicola
  35030 Cervarese S. Croce, Padova (IT)

(74) Representative:
Faraggiana, Vittorio, Dr. Ing.
Ingg. Guzzi & Ravizza S.r.l.
Via Vincenzo Monti 8
20123 Milano (IT)

(54) **OFDM-OQAM multicarrier transmission systems**

(57) An OFDM-OQAM digital base band transmission and reception system with filters for the multiplexing of N complex sequences each with symbol frequency F/2 and spacing F between the frequencies of the adjacent subcarriers is embodied with $f_0=0$ where $f_0$ means the frequency of the subcarrier of order 0. An OFDM-OQAM digital pass band transmission and reception system with filters for the multiplexing of N complex sequences each with symbol frequency F/2 and spacing F between the frequencies of the adjacent subcarriers is embodied with $f_0=0$ where $f_0$ means the base band equivalent frequency of the subcarrier of order 0.

Fig.1

EP 1 032 174 A2

**Description**

The present invention relates to OFDM-OQAM multicarrier transmission systems with very efficient embodiment.

Naturally by transmission system is meant here both the actual transmission act and the corresponding reception.

Multicarrier modulation systems have been known for some time. One of the biggest obstacles to the practical adoption of such systems has been however the considerable computational load which makes their direct accomplishment unpracticable.

In the prior art there have been proposed FFTs (Fast Fourier Transforms) which have made possible development of efficient multicarrier modulator/demodulator systems using rectangular transmission pulses (DTM and OFDM systems).

But development of efficient embodiments has been much more difficult in the case of systems using shaped pulses to obtain higher spectral efficiency. A system with shaped pulses of considerable interest is the OFDM-OQAM system which however has proven very difficult to implement efficiently. In the prior art possible solutions to the problem of efficient embodiment of multicarrier systems with shaped pulses have been proposed. These solutions however still have considerable complexity and are computationally very heavy.

The general purpose of the present invention is to remedy the above mentioned shortcomings by making available an embodiment of an OFDM-OQAM system with less complexity than those presented heretofore as to both base band and pass band transmission.

In view of this purpose it was sought to provide in accordance with the present invention an OFDM-OQAM digital base band transmission and reception system with filters for the multiplexing of N complex sequences each with symbol frequency F/2 and spacing F between the frequencies of the adjacent subcarriers, with $f_0=0$ with $f_0$ being the frequency of the subcarrier of order 0.

Again in accordance with the present invention it was sought to provide an OFDM-OQAM digital pass band transmission and reception system with filters for the multiplexing of N complex sequences each with symbol frequency F/2 and spacing F between the frequencies of the adjacent subcarriers, with $f_0=0$ with $f_0$ being the frequency of the base band equivalent of the subcarrier of order 0.

To clarify the explanation of the innovative principles of the present invention and its advantages compared with the prior art there is described below with the aid of the annexed drawings a possible embodiment thereof by way of non-limiting example applying said principles. In the drawings:

FIG 1 shows a block diagram of an embodiment of an OFDM-OQAM base band modulator in accordance with the present invention,

FIG 2 shows a block diagram for the embodiment of an OFDM-OQAM base band demodulator in accordance with the present invention,

FIG 3 shows a block diagram for an embodiment of an OFDM-OQAM pass band modulator in accordance with the present invention, and

FIG 4 shows a block diagram for an embodiment of an OFDM-OQAM pass band demodulator in accordance with the present invention.

With reference to the FIGS there is described initially an embodiment for base band transmission and subsequently an embodiment for pass band transmission. Hereinafter the following notations are used.

| | |
|---|---|
| N | : number of multiplexed complex sequences. |
| 2T | :spacing between samples of each complex sequence. |
| $c_k(2iT)$ | :$i^{th}$ sample of the $k^{th}$ complex system. |
| T | spacing between the samples of the alternate sequences. |
| $x_k(iT)$ | :$i^{th}$ sample of the $k^{th}$ alternate sequence. |
| T0 | :spacing between the samples of the base band modulated signal. |
| $g(nT_0)$ | :base band transmission filter. |
| $T_1$ | :spacing between the samples of the pass band modulated signal. |
| $Y(nT_1)$ | :pass band transmission filter. |

In base band transmission N complex sequences with time symbol 2T are multiplexed in a single real flow with symbol time $T_0=T/N$. Each complex sequence is first converted into an alternately real and imaginary sequence with halved symbol time T, then multiplexed through an IDFT (Inverse Discrete Fourier Transform) and a polyphase network provided by the transmission filter. The signal transmitted is the real part of the polyphase network output.

In accordance with existing embodiments the IDTF has N inputs and every T is performed 'complete'. The complexity of this operation is therefore, as known, of $N/2\log_2 N-N+1$ multiplications and $N\log_2 N$ complex sums every T. In addition the polyphase network, even if the transmission filter g(t) is real, has a complex reference filter h(t) and complex inputs. Its accomplishment with real arithmetic calls for both the in phase component and the quadrature component for calculation of the real part of the output signal. If g(t) is a FIR with P coefficients the complexity of the network with N branches and output sampled every T, it calls for 2P multiplications and 2P-2N real sums. A representative example of this prior art is described in "An Orthogonally Multiplexed QAM System Using Discrete Fourier Transform", B. Hirosaki, IEEE Trans. on Communications, vol. COM-29, n.7, pages 982-989, July 1981. In accordance with the present invention, from the complex sequences $\{c_k(2iT)\}$ the real-imaginary alternate sequences $\{x_k(iT)\}$ are obtained first as in the prior art but, differently from the prior art (where the central frequency is imposed $f_0=1/(4T)$ ), $f_0=0$ is imposed here. In other words, in the OFDM-OQAM base band digital transmission and reception system having filters for multiplexing of N complex sequences, each with symbol frequency F/2 and spacing F between the frequencies of the adjacent subcarriers, $f_0=0$ is imposed where $f_0$ means the subcarrier frequency of order 0.

In accordance with the present invention the output of the modulator is thus, for $p \in Z$ and $n=0,1,...,2N-1$:

$$v_R(2pT+nT_0)=\Re[v(2pT+nT_0)]=\Re\{\sum_{k=0}^{N-1}\sum_{i=-\infty}^{+\infty}x_k(iT)g(2pT+nT_0-iT)e^{j2\pi kF_2(2pT+nT_0)}\}=$$

$$=\Re\{\sum_{k=0}^{n-1}\sum_{i=-\infty}^{+\infty}x_k(iT)g(2pT+nT_0-iT)e^{j\pi kn/N}\}=\sum_{i=-\infty}^{+\infty}(\Re\{\sum_{k=0}^{N-1}x_k(iT)e^{j\pi kn/N}\})\ g(2pT+nT_0-iT)=$$

$$=\sum_{i=-\infty}^{+\infty}1/2g(2pT+nT_0-iT)\sum_{k=0}^{N-1}(x_k(iT)e^{j\pi kn/N}+x_k^*(iT)e^{-j\pi kn/N})=\sum_{i=-\infty}^{+\infty}1/2g(2pT+nT_0-iT)\sum_{k=0}^{2N-1}\bar{x}_k(iT)e^{j\pi kn/N}=$$

$$=\sum_{i=-\infty}^{+\infty}1/2g(2pT+nT_0-iT)\ \bar{X}_n(iT)$$

where, with $t \in Z(T)$,

$$\bar{x}_k(t)=x_k(t) \qquad \text{for } k=0,1,...N-1$$

$$\bar{x}_k(t)=0 \qquad \text{for } k=N$$

$$\bar{x}_k(t)=x^*_{2N-k}(t) \qquad \text{for } k=N+1,...,2N-1$$

and

$$\bar{X}_n(t)=\sum_{k=0}^{2N-1}\bar{x}_k(iT)e^{j\pi kn/N} \quad \text{for } n=0,1,...,2N-1$$

The vector $\mathbf{X}(iT)\underline{\Delta}[\bar{X}_0(iT),....\bar{X}_{2N-1}(iT)]$ is the IDFT (Inverse Discrete Fourier Transform) of the vector $x(iT)\underline{\Delta}[\bar{x}_0(iT),..\bar{x}_{2N-1}(iT)]$

It is possible to calculate the vector X for four consecutive instants with a single IDFT on 2N points instead of four as is necessary with the prior art solutions. Indeed, given:

$$y_k(iT)\underline{\Delta}j^k x_k(iT), \qquad k=0,...,2N-1$$

the vector $y(t)\underline{\Delta}[y_0(t),...,y_{2N-1}(t)]$ is real and has even symmetry $y_n(2mT)$-$y_{2N-n}(2mT)$ in the even instants, while it is purely imaginary and with uneven symmetry $y_k(2mT+T)=-y_{2N-k}(2mT+T)$ in the uneven instants. Its IDFT $Y(t)$ is therefore always real and also has even symmetry in the even instants and uneven symmetry in the uneven instants.

If the vectors y relative to four consecutive instants are summed we have:

$$a(4\ell T)\underline{\Delta}y(4\ell T)+y(4\ell T-T)+jy(4\ell T-2T)+jy(4\ell T-3T) \ , \ \ell\in Z$$

The IDFT for this sum is

$$A(4\ell T)\underline{\Delta}Y(4\ell T)+Y(4\ell T-T)+jY(4\ell T-2T)+jY(4\ell T-3T)$$

The four addends of this IDFT can easily be separated, finding the real even, real uneven, imaginary even, and imaginary uneven components. Lastly, the vector X is found from the vector Y by means of a cyclic rotation of N/2 positions, i.e. with:

$$X_n(iT)=Y_q(iT) \qquad \text{with } q=(n-N/2)mod2N.$$

The innovative solution found therefore allows calculation of the vector X by executing a complete IDFT on 2N points which requires $N(\log_2 N-N+1)$ multiplications and $2N(\log 2N+1)$ complex sums every 4T. This is a clear reduction of complexity compared with the existing solutions. On the contrary, the innovative solution found requires calculation of the vector a from the vector y and Y from A.

Each calculation requires 2N complex sums. This additional complexity is however less than the saving obtained and makes the innovative solution described above advantageous despite a delay 4T necessary for accumulation of the vector X in four subsequent instants.

With the innovative solution proposed here there is also obtained further reduction of complexity in the polyphase network. Indeed, if in

$$v_R(2pT+nT_0)=\sum_{i=-\infty}^{+\infty}1/2g(2pT+nT_0-iT)\ \overline{X}_n(iT)$$

the transmission filter $g(t_0)$ is real it is possible to obtain the signal $v_R(t)$ as the output of a polyphase network with real decimator filters and real inputs. As the network is made up of 2N branches with filters sampled at time T and outputs sampled every 2T it requires 2P multiplications and 2P-2N real sums every 2T. The number of operations required is the same as for existing diagrams but these are real and not complex operations. The computational complexity is therefore much less. Suffice it to consider that a complex sum requires two real sums and that a complex multiplication requires four multiplications and two real sums. Utilization of the signal symmetries therefore allows a saving of approximately half of the operations in the IDFT. There is also clearly an advantage in being able to use a real polyphase network with real inputs. All this is obtained with only a small number of additional operations.

The above description concerns modulation operation. From the description given demodulation is easily imaginable for one skilled in the art (also based on the following description of a block diagram) as it can be obtained by the modulation specular procedure.

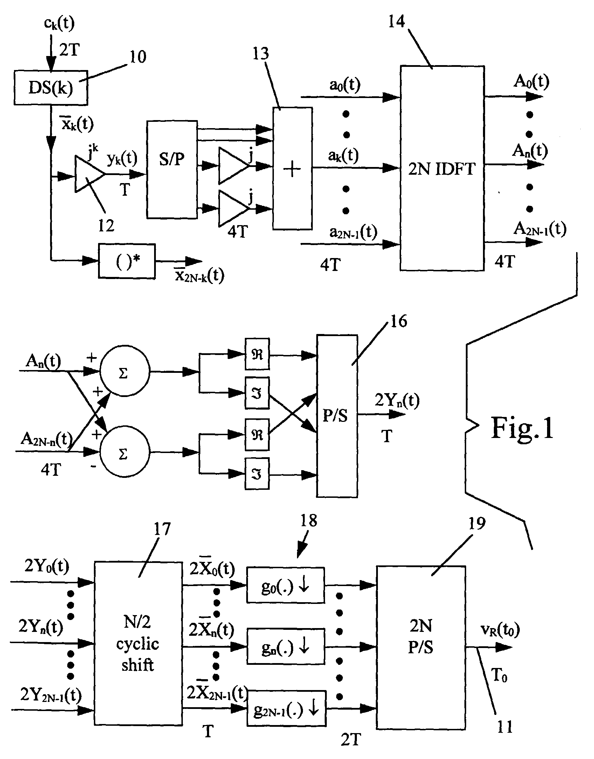

The block diagram of a base band OFDM-OQAM modulator in accordance with the present invention is shown in FIG 1.

As may be seen in FIG 1 the samples $c_k(t)$ of the complex sequence reach the input at 10 every 2T to obtain $v_R$ at the output 11 of the modulator. In the modulator the block DS(k) which is a known producer of alternating sequences of the above type takes $x_k(t)$ from the input samples as explained above. Through the block "()*"is obtained from each sequence $x_k(t)$ the sequence $x_{2N-k}$ as a complex conjugate.

From the 2N sequences $x_k(t)$, k=0,..,2N-1 the multiplier for "$j^k$" 12 produces at output $y_k(t)$ every T. The serial/parallel S/P block collects the values $y_k(t)$ of four successive instants to supply at output the real and imaginary even and uneven values which are summed by the summer 13. There are thus obtained the values $a_0(t)...a_k(t)...a_{2N-1}(y)$ which make up the vector a. The block 14 calculates the IDFT on 2N points to supply at output the values $A_0(t)...A_n(t)...A_{2N-1}(t)$ which make up the vector A.

With circuit 15 there are found the elements $2Y_n(t)$ as the composition in the parallel/serial block 16 of the real and imaginary even and uneven components of the elements of the vector A. The elements $2Y_n(t)$ (with n=0, 1,...,2N-1) are subjected to the cyclic rotation of N/2 positions by means of the cyclic running block 16 to obtain the cor-

responding elements $2X_n(t)$ of the vector X. The elements of the vector X pass into the 2N blocks 18 of the filter network g(.) and thence into the parallel-serial conversion block 19 from which is obtained the desired output $v_R(t)$.

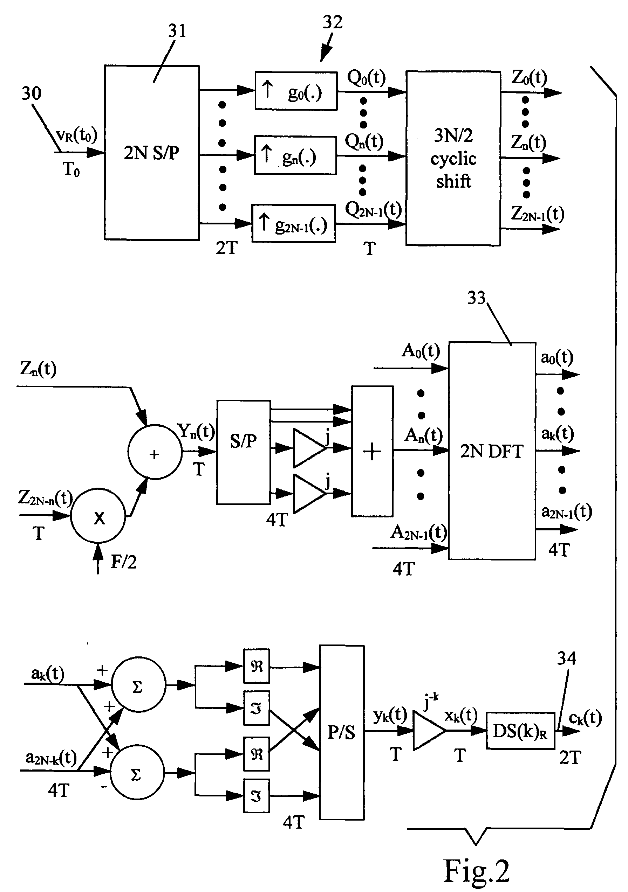

The diagram of the demodulator corresponding to the modulator described is specular to the modulator. It is to be remembered only that in accordance with the principles of the present invention it has a DFT block with 2N complex inputs with symbol frequency F/4 and the polyphase network is made up of 2N filters interpolated with real inputs, input symbol frequency F/2, output symbol frequency F and real coefficients. Such a demodulator is shown in FIG 2.

As may be seen in FIG 2 the signal $v_R(t)$ is applied at input 30, is paralleled at 31, traverses the polyphase network of 2N filters 32, the DFT block 33 to again obtain at output the $c_k(t)$ at 34. For one skilled in the art the diagram shown in FIG 2 is self explanatory, especially on the basis of the above description for the modulator.

There is now described an embodiment for pass band transmission with an OFDM-OQAM pass band digital transmission and reception system with filters for multiplexing of N complex sequences each with symbol frequency F/2 and spacing F between the frequencies of the adjacent subcarriers. In pass band transmission the flow outgoing from the modulator is complex and has symbol time $T_1 = 2T/N$. Here again the sequences are first converted in alternate sequences with symbol time T. The signal transmitted is the output of the polyphase network.

In a known architecture termed 'full complex' the IDTF is optimized by pairing the inputs two by two to reduce complexity. This technique is described in "An OFDM scheme with half complexity", G. Cariolaro, F. Vagliani, IEEE Journal on Selected Areas in Communications, vol. 13, n.9, pages 1586-1599, December 1995. Complexity reduction with such an expedient is however unsatisfactory.

In the present solution the inputs are paired to additionally produce the polyphase network with real coefficients. As seen below, with the innovative solution described a further reduction of total complexity is obtained.

Also with the pass band transmission system, in accordance with the present invention $f_0 = 0$ is imposed where $f_0$ now means the pass band equivalent frequency of the subcarrier of order 0.

The multiplexed signal is, for $p \subset Z, n0,1,...N-1$

$$v(2pT+nT_1) = \sum_{k=0}^{n-1} \sum_{i=-\infty}^{+\infty} x_k(iT)g_T(2pT+nT_1-iT)e^{j2\pi kF_2(2pT+nT_1)} =$$

$$= \sum_{i=-\infty}^{+\infty} g_T(2pT+nT_1-iT)\sum_{k=0}^{N-1} x_k(iT)e^{j2\pi kn/N} =$$

$$= \sum_{i=-\infty}^{+\infty} g_T(2pT+nT_1-iT)(\sum_{k=0}^{N/2-1} x_{2k}(iT)e^{j4\pi kn/N} + e^{j2\pi n/N}\sum_{k=0}^{N/2-1} x_{2k+1}(iT)e^{j4\pi kn/N}) =$$

$$= \sum_{i=-\infty}^{+\infty} g_T(2pT+nT_1-iT)(S_n(iT)+e^{j2\pi n/N}Z_n(iT)) = \sum_{i=-\infty}^{+\infty} g_T(2pT+nT_1-iT)(P_n(iT)$$

where

$$S_n(iT) = \sum_{k=0}^{N/2-1} x_{2k}(iT)e^{j4\pi kn/N} \quad , \quad Z_n(iT) = \sum_{k=0}^{N/2-1} x_{2k+1}(iT)e^{j4\pi kn/N}$$

It is noted that both $S_n(iT)$ and $Z_n(iT)$ at a predetermined instant are made up of the repetition of a sequence N/2 samples long and that this sequence is for $S_n$ the IDFT of the even inputs and for $Z_n$ the IDFT of the uneven inputs.

In addition it is noted that the even inputs are real at the even instants and imaginary at the uneven instants while the uneven inputs are real at the uneven instants and imaginary at the even instants. It is therefore possible to define a vector with N/2 components $\mathbf{u}(iT)$ with $u_k(iT) = x_{2k}(iT) + x_{2k+1}(iT)$ and calculate the complete IDTF $\mathbf{U}(iT)$ of

which the **S**(it) is the hermitian symmetry at the even instants and antihermitian symmetry at the uneven instants while for **Z**(iT) it is the reverse.

The IDFT block thus accomplishes a complete IDFT on N/2 points every T and with N/2 complex multiplications for $e^{j2\pi n/N}$ and N sums or subtractions every T the N complex quantities $P_n$(iT) are calculated. Complexity is therefore equal to that of the prior art embodiments. It should however be noted that these N sequences are the polyphase network inputs made up of N real filters with samples spaced by T and with outputs sampled every 2T. If the reference filter is an FIR with P coefficients, its embodiment therefore requires 2P multiplications of a complex input sample for a real coefficient and 2P-N complex sums every 2T. Differently from a complex multiplication a multiplication of a real number by a complex number involves only two real multiplications. The complexity of the polyphase network is therefore approximately half the complexity of a prior art polyphase network. In an embodiment in accordance with the present invention there is therefore a clear overall saving.

Demodulation is a specular operation with respect to that described above and is easily imaginable to those skilled in the art on the basis of the instructions given here.

For example, in the modulator the polyphase network is characterized in that it comprises N sampling filters with complex inputs, input symbol frequencies of F, output symbol frequencies of F/2 and real coefficients. In the demodulator the polyphase network is characterized in that it comprises N interpolating filters with complex inputs, input symbol frequencies of F/2, output symbol frequencies of F and real coefficients.

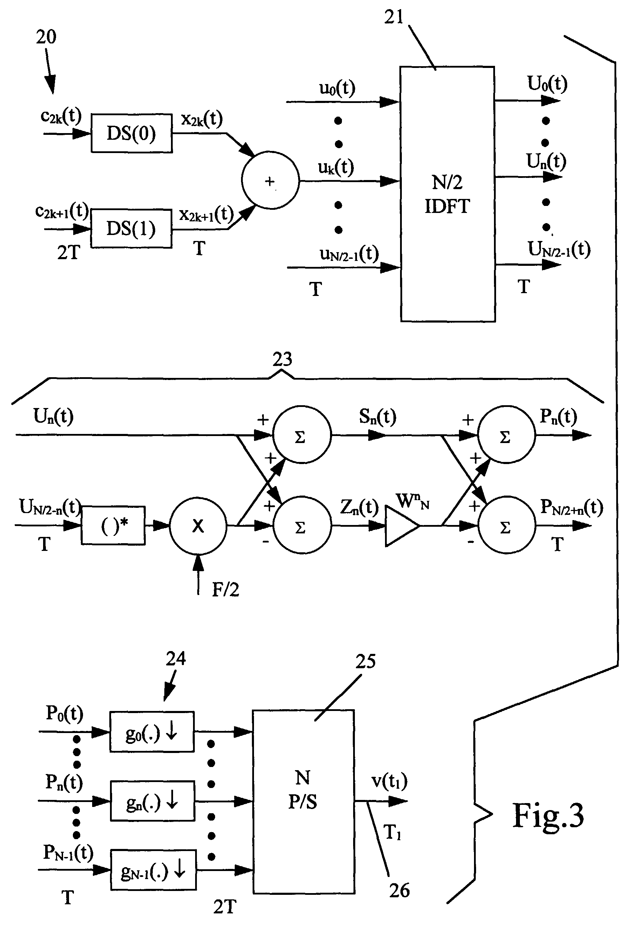

FIG 3 shows the block diagram of an embodiment in accordance with the present invention for the OFDM-OQAM pass band modulator. Therein the samples c reach the inputs 20 every 2T. From each pair $c_{2k}$(T) and $C_{2k+1}$(t) are taken the corresponding elements $x_{2k}$(t) e $x_{2k+1}$(t) which appropriately summed supply the elements $u_k$(t) of the vector **u**(iT). The block 21 calculates the complete IDFT **U**(iT) of the vector **u**(iT). The circuit 23 calculates every T, as above mentioned, the quantities Pn(t) which are applied to the polyphase network where they pass into the filter blocks 24 and thence to the parallel/series converter 25 which samples the outputs of the filters every 2T and supplies at the output 26 the sought $v(t_1)$ with time $T_1$. As mentioned above the complexity of the IDFT and the additional calculations associated therewith is the same as in the prior art but in the polyphase network there is a clear saving which overall makes use of the diagram of FIG 3 computationally much less burdensome than the prior art.

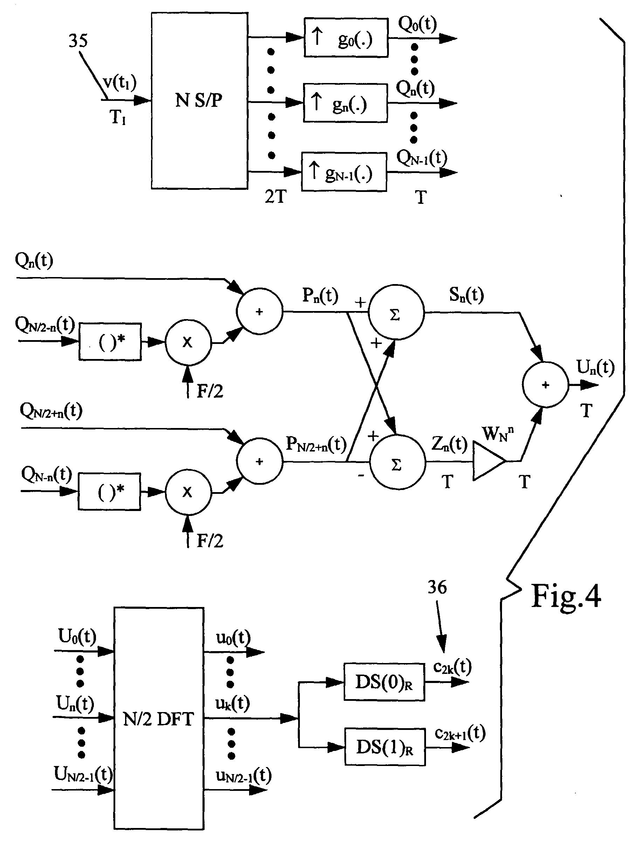

FIG 4 shows by way of example a corresponding demodulator embodied in accordance with the principles of the present invention. It is readily comprehensible on the basis of the above explanations. It has an input 35 for the v(t) and outputs 36 for the sequences ck.

It is now clear that the predetermined purposes have been achieved by making available an OFDM-OQAM base band and pass band digital transmission and reception system of particular efficiency.

Naturally the above description of an embodiment applying the innovative principles of the present invention is given by way of non-limiting example of said principles within the scope of the exclusive right claimed here.

**Claims**

1.  OFDM-OQAM digital base band transmission and reception system with filters for the multiplexing of N complex sequences each with symbol frequency F/2 and spacing F between the frequencies of the adjacent subcarriers and with $f_0$=0 with $f_0$ being the frequency of the subcarrier of order 0.

2.  System in accordance with claim 1 characterized in that it comprises a modulator which in turn comprises an IDFT block with 2N complex inputs with symbol frequency F/4.

3.  System in accordance with claim 2 characterized in that the modulator comprises a polyphase network made up of 2N sampling filters with real inputs, input symbol frequencies of F, output symbol frequencies of F/2 and real coefficients.

4.  System in accordance with claim 1 characterized in that it comprises a modulator whose output is given by:

$$v_R(2pT+nT_0)=\sum_{i=-\infty}^{+\infty} 1/2\, g(2pT+nT_0-iT)\, \overline{X_n}(iT)$$

where, with t∈ Z(T),

$$\overline{X}_n(t)=\sum_{k=0}^{2N-1}\overline{x_k}(iT)e^{j\pi kn/N} \qquad \text{for} \quad n=0,1,...,2N-1$$

**5.** System in accordance with claim 1 characterized in that it comprises a demodulator which in turn comprises a DFT block with 2N complex inputs with symbol frequency F/4.

**6.** System in accordance with claim 5 characterized in that the demodulator comprises a polyphase network made up of 2N filters interpolated with real inputs, input symbol frequencies of F/2, output symbol frequency of F and real coefficients.

**7.** OFDM-OQAM pass band digital transmission and reception system with filters for multiplexing of N complex frequencies each with symbol frequency F/2 and spacing F between the adjacent subcarrier frequencies with $f_0=0$ and with $f_0$ being the band base equivalent frequency of the subcarrier of order 0.

**8.** System in accordance with claim 7 characterized in that it comprises a modulator comprising in turn a polyphase network made up of N sampling filters with complex inputs, input symbol frequencies of F, output symbol frequency of F/2 and real coefficients.

**9.** System in accordance with claim 7 characterized in that it comprises a demodulator comprising in turn a polyphase network made up of N interpolating filters with complex inputs, input symbol frequencies of F/2, output symbol frequency of F and real coefficients.

**10.** System in accordance with claim 7 characterized in that the modulator output is given by:

$$v(2pT+nT_1) = \sum_{i=-\infty}^{+\infty}g_T(2pT+nT_1-iT)(S_n(iT)+e^{j2\pi n/N}Z_n(iT))=\sum_{i=-\infty}^{+\infty}g_T(2pT+nT_1-iT)(P_n(iT)$$

where

$$S_n(iT)=\sum_{k=0}^{N/2-1}x_{2k}(iT)e^{j4\pi kn/N} \quad , \qquad Z_n(iT)=\sum_{k=0}^{N/2-1}x_{2k+1}(iT)e^{j4\pi kn/N}$$

Fig.1

Fig.2

Fig.3

Fig.4